# EUROPÄISCHE PATENTSCHRIFT

(11) **EP 0 734 347 B1**
(45) Veröffentlichungstag und Bekanntmachung des Hinweises auf die Patenterteilung: **14.05.1997**
(21) Anmeldenummer: 95905129.3
(22) Anmeldetag: 10.01.1995
(51) Int. Cl.: B65F 3/04, B65F 3/00

(54) **FAHRBETRIEBSSICHERUNG FÜR HUBKIPPVORRICHTUNGEN**
SAFETY DEVICE FOR PROTECTING LIFTING AND TIPPING DEVICES DURING DRIVING
DISPOSITIF DE PROTECTION D'UN DISPOSITIF ELEVATEUR-CULBUTEUR PENDANT LA MARCHE D'UN VEHICULE

(30) Priorität: 13.01.1994 DE 4400750
(43) Veröffentlichungstag der Anmeldung: 02.10.1996
(73) Patentinhaber: Zöller-Kipper GmbH, D-55130 Mainz (DE)
(72) Erfinder: RECK, Herbert, D-55130 Mainz (DE)
(74) Vertreter: Fuchs, Luderschmidt & Partner
(86) Internationale Anmeldenummer: EP9500070
(87) Internationale Veröffentlichungsnummer: WO9519307

(56) Entgegenhaltungen:
- EP-A- 0 391 225
- EP-A- 0 569 927
- DE-A- 4 121 720
- DE-U- 9 400 484

## Beschreibung

Die Erfindung betrifft ein Müllfahrzeug mit einer am Heck angeordneten Hubkipp- oder Kippvorrichtung zur Entleerung von Müllbehältern in die Einschüttöffnung des Sammelbehälters.

Die Hubkippvorrichtung ist so am Heckteil des Fahrzeugs, bzw. des Sammelbehälters angeordnet, daß sie in abgesenkter Stellung die gängigen Behälter vom Boden her aufnehmen kann und unter Anheben und Kippen in die Einschüttöffnung des Sammelbehälters entleeren kann.

Die Müllbehälter werden dabei an ihrem Rand oder einer anderen geeigneten Mitnahme erfaßt und während des Anhebens und Kippens durch eine untere Anlage abgestützt, um sie schonend zu entleeren.

Bei abgesenkter Vorrichtung befindet sich die untere Anlage deshalb zwangsläufig dicht über dem Boden. Wenn das Müllfahrzeug nun mit der abgesenkten Vorrichtung weiterfährt oder, wie es häufig zu beobachten ist, rückwärts an den Stellplatz der Müllgefäße rangiert, besteht die Gefahr, daß die Vorrichtung durch Unebenheiten des Bodens beschädigt wird. Im allgemeinen werden die Vorrichtungen zwar vor jeder Weiterfahrt durch manuelle Bedienung in eine obere Fahrstellung gebracht, es passiert aber immer wieder, daß durch Nachlässigkeit oder mangelnde Kenntnis die Fahrstellung nicht eingestellt wird.

Aus DE 39 10 660 A1 ist eine Sicherheitsschaltanordnung für Hubkipp-oder Kippvorrichtungen für den automatischen Betrieb bekannt, bei der die Auslöseschalter wie Klappenschalter und Quittungssignalschalter an eine Stromlaufüberwachungseinrichtung angeschlossen sind. Die Stromlaufüberwachungseinrichtung gibt den Automatikbetrieb der Hubkippvorrichtung erst frei, wenn an allen überwachten Schaltern und Sensoren der Sollschaltzustand in der vorgesehenen Reihenfolge hergestellt ist. Die Stromlaufüberwachungseinrichtung kann auch zur Überprüfung der Schaltstellung der Gangschaltung des Fahrzeugs ausgebildet sein. In diesem Fall wird ein Freigabesignal an die Automatiksteuereinrichtung nur dann abgegeben, wenn der Rückwärtsgang nicht eingelegt ist.
Diese Überwachung verhindert nicht die Fahrt mit abgesenkter Vorrichtung.

Aus DE 92 06 606 U1 ist ein Müllfahrzeug bekannt, bei welchem eine Hubkippvorrichtung und ein Trittbrett für das Mitfahren der Müllwerker durch Lagesensoren und ein Steuergerät so überwacht werden, daß ein gegenseitiger Konflikt durch Fehlbedienung auszuschließen ist. Die Hubkippvorrichtung kann erst in Arbeitsstellung abgesenkt werden, wenn das Trittbrett aus deren Wirkbereich entfernt wurde und umgekehrt. Die Fahrt des Fahrzeugs mit abgesenkter Vorrichtung wird auch hier nicht verhindert.

Aufgabe der Erfindung ist es, diesen Nachteil zu vermeiden und die Fahrstellung von Hubkippvorrichtungen zwangsgesteuert einzustellen, ohne daß hierzu besonderer Handgriffe oder Aufmerksamkeit des Bedienpersonals erforderlich wäre.

Die Lösung dieser Aufgabe ergibt sich durch eine Ausbildung gemäß den kennzeichnenden Merkmalen des Anspruchs 1; vorteilhafte Ausgestaltungen sind Gegenstand der Unteransprüche.

Die erfindungsgemäße Anordnung des Druckspeichers in der Hydraulikanlage des Fahrzeugs und/oder der Hubkippvorrichtung hat den Vorteil, daß während des Normalbetriebs der Druckspeicher mit überschüssigem Druckmittel gefüllt werden kann und dessen Inhalt nach dem Abschalten der Hydraulikanlage des Fahrzeugs bei Bedarf über ein gesteuertes Hydraulik-System zur Antriebseinheit der Hubkippvorrichtung geleitet werden kann, um diese in eine sichere Weiterfahrhöhe zu bringen.

Der jeweilige Betriebszustand des Hubkippvorrichtung wird durch eine elektronische Steuerung überwacht, und je nach Bedarf wird über die Ventile von Steuer-und oder Regelblock der Druckspeicher gefüllt oder geleert. Der Druckspeicher hat vorzugsweise ein Füllvolumen, das ausreicht, um die Behälteraufnahme bzw. die untere Abstützung des Behälters am Hubrahmen der Hubkippvorrichtung in eine sichere Höhe zu verfahren. Der Hubendstand wird in bekannter Weise mittels Rückschlagventilen im Hydrauliksystem gesichert.

In vorteilhafter Weiterbildung bekommt die elektronische Steuerung ihren Steuerbefehl vom Getriebe und /oder vom Nebenantrieb des Fahrzeugs im Zusammenwirken mit Lagesensoren der Hubkippvorrichtung.

Die Lagesensoren sind vorteilhaft am Hubrahmen der Hubkippvorrichtung angeordnet und wirken als Positionsmelder der Hubeinheit an die Steuereinheit.
Nachdem die Steuereinheit die vorliegenden Signale überprüft hat, geht der erforderliche Befehl an die Magnetventile zum Öffnen oder Schließen und damit der Befehl Druckspeicher Füllen oder Entleeren.
Druckspeicher entleeren bedeutet im Sinne der Erfindung Anheben des Hubwagens in eine sichere Fahrstellung.

Ein vorteilhaftes Ausführungsbeispiel wird nachfolgend anhand der Zeichnung näher erläutert.

Es zeigen schematisch
Fig. 1 eine Darstellung einer erfindungsgemäßen Anordnung an einem teilweise dargestellten Müllfahrzeug
Fig. 2 die Rückansicht eines Müllfahrzeugs mit zwei Hubkippvorrichtungen.
Fig. 3 die Seitenansicht einer Hubkippvorrichtung in abgesenkter Stellung.

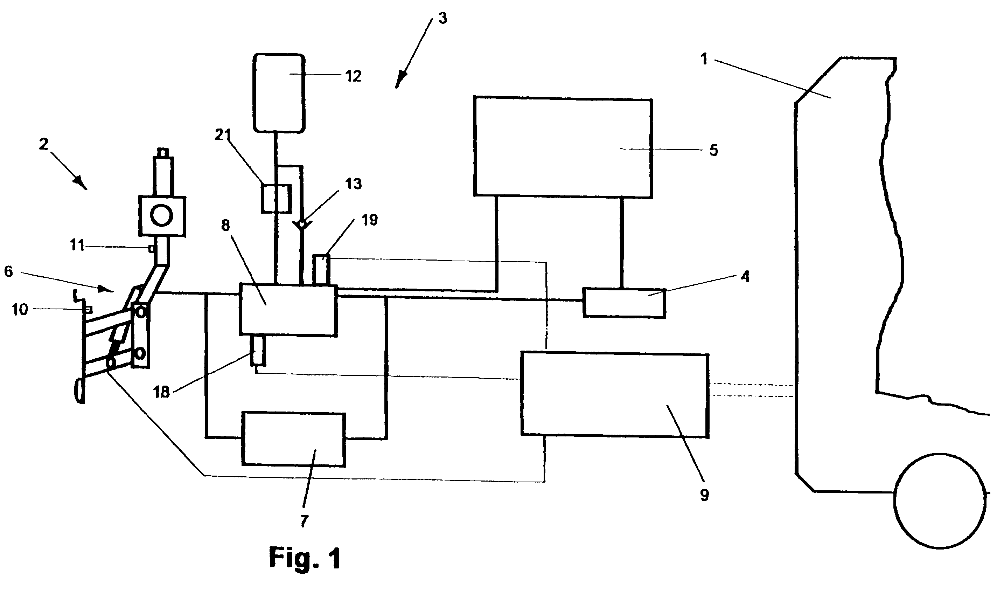

Die Fig. 1 zeigt das Heckteil eines Müllfahrzeugs 1 mit einer Hubkippvorrichtung 2.
Das Müllfahrzeug 1 ist mit einem Hydraulikkreislauf 3 versehen, über den zum einen das Ladewerk des Fahrzeugs und zum anderen die Hubkippvorrichtung 2 mit Druckmittel versorgt wird. Das Druckmittel wird durch die Pumpe 4 aus dem Tank 5 zu den jeweiligen Antriebseinheiten gefördert, im Normalfall sind das Kolben/Zylindereinheiten 6, die über Ventile mit dem Druckmittel beaufschlagt werden. Die Ventile sind als Elektromagnetventile in Blockbauweise ausgebildet und in je einem Steuerblock 7 für die Lifterhydraulik und einem Regelblock 8 für die erfindungsgemäße Fahrbetriebssicherung zusammengefaßt. Steuerblock 7 und Regelblock 8 werden durch eine elektronische Steuerung 9, die Fahrzeug- oder Vorrichtungsseitig angeordnet sein kann, überwacht und gesteuert.

Die elektronische Steuerung 9 erhält Signale vom nicht dargestellten Betriebsart-Erkennungs-Schalter des Fahrzeugs 1 über die jeweils vorliegende Betriebsart, z.B. Rückwärtsgang, Vorwärtsgang, Nebenantrieb ein/aus. Über Sensoren 10, 11, wird die jeweilige Hubstellung der Hubkippvorrichtung abgefragt bzw. signalisiert.

Im Normalbetrieb fördert die Pumpe 4 das Druckmittel über den Steuerblock 7 zur Hubkippvorrichtung 2. Das überschüssige Druckmittel, welches normalerweise in den Tank 5 zurückgeführt wird, wird nach der erfindungsgemäßen Ausgestaltung über den Regelblock 8 in den Druckspeicher 12 geleitet. Im gezeigten Beispiel ist der Regelblock 8 mit zwei Magnet-Wegeventilen 18, 19 ausgestattet, Ventil 19 zum Befüllen des Druckspeichers 12 Ventile 18 zum Entleeren, bzw. Anheben der Hubkippvorrichtungen 2. Der Füllstand des Druckspeichers 12 wird durch ein Rückschlagventil 13 gesichert. Erst wenn der Druckspeicher 12 gefüllt ist, wird der Rücklauf des überschüssigen Druckmittels in den Tank 5 freigegeben.

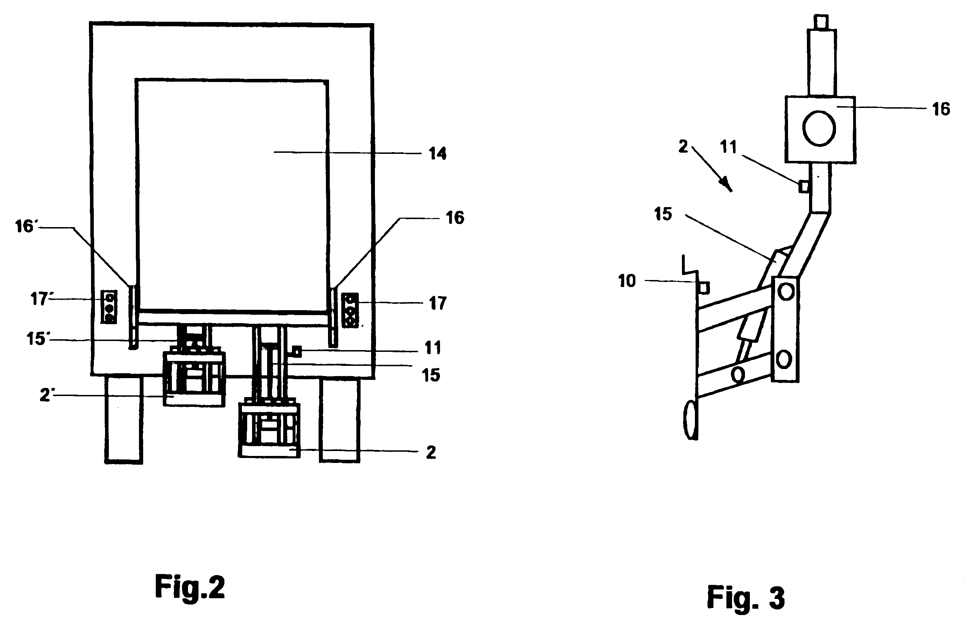

Die Fig. 2 zeigt das Müllfahrzeug 1 in der Ansicht von hinten. Unterhalb der Einschüttöffnung 14 sind an koaxial angeordneten Schwenkwellen zwei Hubkippvorrichtungen 2, 2' angeordnet, die mittels Hubzylinder 15 15' angehoben und mittels Schwenkmotoren 16 16' die angehobenen Behälter in die Einschüttöffnung 14 einkippen. Der Arbeitsablauf der Hubkippvorrichtungen 2, 2' wird elektrisch über Taster 17, 17' eingeleitet. Mit diesen Tastern werden die Bewegungen auf/ab und die Einstellung der Weiterfahrhöhe bewirkt.
Die Hubkippvorrichtung 2 berührt im gezeigten Beispiel nahezu den Boden, sie würde beschädigt, wenn das Fahrzeug 1 in dieser Stellung der Hubkippvorrichtung 2 eine Fahrbewegung ausführt. Deshalb wird im Normalfall über die Taster 17 bzw. 17' eine Weiterfahrhöhe eingestellt, wie sie in etwa die Hubkippvorrichtung 2' eingenommen hat. Dieser Vorgang wird vom Müllwerker manuell über die Taster 17 bzw. 17' erledigt. Die Müllfahrzeuge sind zum überwiegenden Teil in der Hydraulikanlage mit einem Nebenantrieb für die Versorgung der integrierten und angebauten Arbeitsgeräte ausgestattet. Sinnvoller Weise wird dieser Nebenantrieb dann automatisch abgeschaltet, wenn der Fahrer einen Gang zur Weiterfahrt, sei es rückwärts oder vorwärts, einlegt. Wenn der Müllwerker bis zu diesem Zeitpunkt die Hubkippvorrichtung bzw. Hubkippvorrichtungen noch nicht auf eine Weiterfahrhöhe gebracht hat, werden die Vorrichtungen unweigerlich beschädigt. Andererseits ist der Müllwerker nach dem Abschalten des Nebenantriebs auch nicht mehr in der Lage, die Hubkippvorrichtungen 2, 2' nach oben zu bewegen, da die Hydraukikanlage abgeschaltet ist.

Durch die erfindungsgemäße Ausbildung wird dieser Nachteil wie folgt behoben. Die elektronische Steuerung 9 erhält bei dem Einlegen eines Vorwärts-oder eines Rückwärtsganges ein Signal und prüft daraufhin den Betriebszustand der Hubkippvorrichtung über die Sensoren 10, 11. Wenn die Sensoren wie in Fig. 3 gezeigt nicht bedämpft, d.h. nicht im gegenseitigen Schaltkontakt sind, gibt die elektronische Steuerung 9 ein Signal an den Regelblock 8 der Fahrbetriebssicherung. Im Regelblock 8 wird das entsprechenden Magnetventile 18 geöffnet und der Inhalt des Druckspeichers zu den Kolben/Zylindereinheiten 6 der Hubkippvorrichtung geleitet, die dadurch in die Weiterfahrhöhe angehoben wird. Die Menge im Druckspeicher ist so bemessen, daß sie gerade ausreicht, um die Vorrichtung in eine sichere Höhe zu bringen, diese kann für jede Hubkippvorrichtung bzw. für jeden Bedarfsfall individuell angepaßt werden. Es ist selbstverständlich, daß es auch im Rahmen der Erfindung liegt, bei Anordnung von mehr als einer Hubkippvorrichtung wie z.B. in Fig. 2 gezeigt, jeweils einen separat zugeordneten eigenen Druckspeicher mit einem entsprechend erweiterten Hydraulik - und angepaßtem Steuersystem zu benutzen. Um die Einstellung der Weiterfahrhöhe für das Bedienungspersonal gefahrlos ablaufen zu lassen, wird die Abgabe des Speicherinhaltes über ein Druckbegrenzungsventil 21 verzögert. Damit ist gewährleistet, daß die jeweilige Hubkippvorrichtung mit einer voreinstellbaren bzw. vorgegebenen Geschwindigkeit angehoben wird.

## Patentansprüche

1. Fahrbetriebssicherung für eine Hubkippvorichtung an Müllfahrzeugen, dadurch gekennzeichnet, daß die Hydraulikanlage (3) des Fahzeugs (1) während des Normalbetriebs einen Druckspeicher (12) füllt, dessen Inhalt durch Einschalten des Fahrzeuggetriebes auf Fahrt des Fahrzeugs (1) bei abgesenkter Hubkippvorrichtung (2) über ein gesteuertes Hydraulik-System zur Antriebseinheit (6) der Hubkippvorrichtung (2) geleitet wird, um diese in eine sichere Weiterfahrhöhe zu bringen.

2. Fahrbetriebssicherung nach Anspruch 1, gekennzeichnet durch eine elektronische Steuerung (9), welche die jeweils vorliegende Betriebsbedingung des Fahrzeugs (1) und der Hubkippvorrichtung (2) überwacht.

3. Fahrbetriebssicherung nach einem oder mehreren der Ansprüche 1 oder 2, dadurch gekennzeichnet, daß die Hubkippvorrichtung (2) mit Lagesensoren (10, 11) versehen ist, welche die jeweilige Stellung der Hubkippvorrichtung erfassen und/oder signalisieren.

4. Fahrbetriebssicherung nach Anspruch 2 oder 3, dadurch gekennzeichnet, daß die elektronische Steuerung (9) den Steuerbefehl vom Getriebe des Fahrzeugs bekommt und nach Abfrage von Lagesensoren (10, 11) die Magnetventile (18, 19) eines Regelblocks (8) und/oder eines Steuerblocks (9) öffnet oder schließt, über die der Druckspeicher (12) gefüllt oder entleert wird.

## Claims

1. Driving safety device for a lifting and tipping device on refuse vehicles, characterized in that, during normal operation, the hydraulic system (3) of the vehicle (1) fills a pressure accumulator (12) the content of which is directed to the drive unit (6) of the lifting and tipping device (2), by means of a controlled hydraulic system, by the engagement of the transmission of the vehicle (1) in drive with the lifting and tipping device lowered, in order to bring the lifting and tipping device (2) to a save level for driving on.

2. Driving safety device according to claim 1, characterized by an electronic control (9) which monitors the operating condition of the vehicle (1) and of the lifting and tipping device (1) existing at the time in question.

3. Driving safety device according to one or more of claims 1 and 2, characterized in that the lifting and tippping device (2) is provided with position sensors (10, 11) which detect and/or indicate the position of the lifting and tipping device at the time in question.

4. Driving safety device according to claim 2 or 3, characterized in that the electronic control (9) receives the control command from the transmission of the vehicle and, after interrogation of position sensors (10, 11), opens or closes the solenoid valve (18,19) of a regulation block (8) and/or of a control block (9) by means of which the pressure accumulator (12) is filled or emptied.

## Revendications

1. Système de sécurité utilisé lors de la marche d'un véhicule, qui est destiné à un dispositif de soulèvement-basculement sur des véhicules d'enlèvement des ordures ménagères, caractérisé en ce que le système hydraulique (3) du véhicule (1), au cours de la marche normale, remplit un accumulateur hydraulique (12) dont le contenu, par la mise en prise de la boîte de vitesses du véhicule permettant au véhicule (1) de se déplacer, lorsque le dispositif de soulèvement-basculement (2) est abaissé, est guidé via un système hydraulique commandé, en direction de l'unité de commande (6) du dispositif de soulèvement-basculement (2) pour amener ce dernier à une hauteur sans danger pour le déplacement ultérieur.

2. Système de sécurité utilisé lors de la marche d'un véhicule selon la revendication 1, caractérisé par une commande électronique (9) qui surveille les conditions de marche respectivement présentes du véhicule (1) et du dispositif de soulèvement-basculement (2).

3. Système de sécurité utilisé lors de la marche d'un véhicule selon une ou plusieurs des revendications 1 ou 2, caractérisé en ce que le dispositif de soulèvement-basculement (2) est muni de détecteurs de position (10, 11) qui enregistrent et/ou signalent la position respective du dispositif de soulèvement-basculement.

4. Système de sécurité utilisé lors de la marche d'un véhicule selon la revendication 2 ou 3, caractérisé en ce que la commande électronique (9) reçoit l'ordre de commande de la part de la boîte de vitesses du véhicule et, après interrogation des détecteurs de position (10, 11), ouvre ou ferme les vannes magnétiques (18, 19) d'un bloc de réglage (8) et/ou d'un bloc de commande (9), par lesquelles l'accumulateur hydraulique (12) est rempli ou vidé.
